# FASCICULE DE BREVET EUROPEEN

(11) **EP 0 376 795 B1**
(45) Date de publication et mention de la délivrance du brevet: **04.08.1993**
(21) Numéro de dépôt: 89403525.2
(22) Date de dépôt: 18.12.1989
(51) Int. Cl.: E21B 47/00, G01L 1/22, G01B 7/18, G01B 5/30

(54) **Capteur extensométrique de mesure de contraintes pour élément de forage**
Ausdehnungsmesssonde zur Messung der Belastung für ein Bohrelement
Stress-measuring extensometer transducer for a drilling element

(30) Priorité: 29.12.1988 FR 8817556
(43) Date de publication de la demande: 04.07.1990
(73) Titulaire: INSTITUT FRANCAIS DU PETROLE, 92502 Rueil-Malmaison (FR)
(72) Inventeur: Morin, Pierre, F-92300 Levallois Perret (FR); Mabile, Claude, F-92170 Vanves (FR)

(56) Documents cités:
- GB-A- 1 456 403
- US-A- 3 965 736
- US-A- 3 968 473
- US-A- 4 251 918
- US-A- 4 359 898
- US-A- 4 608 861

## Description

La présente invention concerne un capteur extensométrique de mesure de contraintes agissant sur un élément de forage au fond d'un puits, ainsi que son dispositif de montage sur l'élément, visant à mesurer la tension et le couple de torsion s'appliquant dans les conditions de fond en forage.

Les efforts exercés sur le matériel de forage au fond d'un puits lorsque l'on progresse dans la formation sont considérables et impliquent des déformations importantes pouvant éventuellement endommager des appareils de mesure situés à proximité de l'extrémité munie d'un outil ou d'une sonde. Il est donc nécessaire d'analyser les contraintes qui s'exercent sur le matériel pour en déduire les modifications à apporter aux conditions de forage.

Si l'on étudie les contraintes exercées sur un tube soumis aux conditions de fond en forage, on constate que celles-ci sont essentiellement de trois ordres : flexion par rapport à l'axe de l'élément de forage, tension/traction le long de cet axe et couple de torsion. Parmi ces contraintes celles dues à la flexion sont nettement supérieures à celles dues à la tension ou au couple de torsion.

On connait par le brevet GB 1456403 un appareillage de mesure des contraintes par jauges de contraintes disposées en part de mesure. Mais cet appareillage ne permet pas le découpage des mesures contraintes de différentes directions. On connait par le brevet US 4251918 un système de mesure extensiométrique uni ou biaxiale. Mais ce système n'est pas adapté à mesurer les contraintes de flexion, tension, compression et torsion sur un élément de forage au fond d'un puit.

Une des méthodes existantes d'évaluation de contraintes appliquées dans le domaine du forage consiste à coller des jauges de contraintes selon des positions appropriées le long de l'élément de forage et à traiter les signaux collectés de manière à évaluer par découplage les contraintes de flexion, traction et torsion. On constate alors que les contraintes de flexion s'exercent dans une direction perpendiculaire aux contraintes de torsion.

De manière à s'affranchir des contraintes de flexion, si l'on place des jauges de contraintes d'une façon diamétralement symétrique par rapport à l'axe du tube, la somme des mesures de ces contraintes de flexion s'annule. Au contraire la somme des contraintes de traction mesurées dans les mêmes conditions permet de doubler la sensibilité de la mesure.

Ainsi théoriquement par un collage approprié des jauges d'extension, on obtient un découplage complet entre les mesures de flexion, tension/traction et torsion.

Cependant les imperfections du métal et les légères erreurs de collage font que l'on observe des effets dits de sensibilité transverse.

Ainsi si l'on soumet l'élément à une flexion pure, on observera un effet plus ou moins important sur la mesure de la tension ou de la torsion.

Cette sensibilité transverse est d'autant plus importante que le niveau de l'effet que l'on veut mesurer est faible par rapport à celui du signal perturbateur. C'est le cas pour un tube soumis aux conditions de fond en forage.

La présente invention vise donc à pallier les inconvénients précités et notamment à supprimer les effets de sensibilité traverse par l'utilisation d'un capteur extensométrique monté sur le tube et soumis aux conditions de fond de forage, ce capteur étant réalisé de manière à assurer un positionnement simple et fiable des jauges pour un découplage complet entre les mesures de flexion, tension et torsion.

L'idée mère de la présente invention est de réaliser le capteur extensométrique sous la forme de deux parallélogrammes déformables placés perpendiculairement l'un à l'autre, chacun recevant sur deux cotés opposés, faiblement dimensionnées par rapport à la longueur totale du capteur, les jauges d'extension qui, de par la position respective des deux parallélogrammes l'un par rapport à l'autre et par la fixation du capteur longitudinalement sur le tube permettent un découplage des mesures de tension et de torsion.

La présente invention a donc pour objet un capteur extensométrique de mesure de contraintes à l'aide de jauges agissant sur un élément de forage au fond d'un puits, caractérisé en ce que ledit capteur, comporte :
- une première zone de mesure composée d'au moins deux lames de traction sur lesquelles sont montées des jauges de mesure reliées à leurs extrémités par des montants de manière à réaliser un premier parallélogramme déformable, lesdites lames de traction étant orientées suivant une première direction,
- une seconde zone de mesure composée d'au moins deux lames de torsion sur lesquelles sont montées des jauges de mesure, reliées à leurs extrémités par des traverses de manière à réaliser un second parallélogramme déformable, lesdites lames de torsion étant orientées suivant une seconde direction perpendiculaire à la première direction,
- ladite première zone et ladite seconde zone étant reliées l'une à l'autre par des moyens de coopération et munies de moyens de montage sur ledit élément de forage,
- lesdites traverses et lesdits montants étant largement dimensionnés par rapport auxdites lames de torsion, et auxdites lames de tension.

Selon une caractéristique particulière de l'invention, les moyens de coopération entre la première zone et la seconde zone comprennent une articulation disposée centralement par rapport à un axe longitudinal passant par lesdites première et seconde zones, ladite articulation assurant une flexion du capteur selon ledit axe longitudinal sans action de déformation sur les première et seconde zones.

Avantageusement, les montants de la première zone comportent chacun à une de leurs extrémités un prolongement à l'équerre, un prolongement d'un premier montant étant relié à l'articulation de flexion, et un prolongement d'un second montant étant muni d'une patte de fixation audit élément de forage.

Selon une autre caractéristique de l'invention, une première traverse de la seconde zone est reliée à l'articulation de flexion et une seconde traverse est munie d'une patte de fixation audit élément de forage.

Les prolongements des montants et les traverses sont avantageusement situés dans des directions parallèles, perpendiculaires à la direction de l'articulation de flexion.

Selon un mode de réalisation préféré de l'invention, chacune des première et seconde zones de mesure comporte trois lames, dont deux d'entre elles réalisent les faces opposées du parallélogramme déformable et dont la troisième, médiane aux deux premières, supporte les jauges de mesure de contraintes.

Avantageusement, le rapport entre la longueur des lames et la longueur totale du capteur est compris dans un intervalle de 1/10 à 2/10 et le rapport entre l'épaisseur desdites lames et l'épaisseur des montants ou des traverses est compris dans un intervalle de 1/20 à 1/10.

La présente invention a également pour objet un dispositif de montage d'au moins un capteur extensométrique de mesure de contraintes, tel que précédemment décrit, sur un élément de forage au fond d'un puits, caractérisé en ce que le capteur est monté sur ledit élément par des moyens de support de manière à ce que l'axe dudit capteur soit sensiblement dans la direction longitudinale dudit élément de forage.

Selon un mode de réalisation particulier de ce dispositif de montage, les moyens de support sont constitués par deux couronnes disposées autour de l'élément de forage et supportant d'une part, chacune une extrémité d'un capteur par l'intermédiaire d'une patte de fixation et d'autre part une pièce disposée symétriquement audit capteur par rapport à l'axe de l'élément de forage.

Avantageusement, ladite pièce placée symétriquement à un capteur, est constituée par un second capteur extensomètrique.

Chacune des couronnes de support comporte deux saillies diamétralement opposées par rapport à l'axe de l'élément de forage, situées dans une direction perpendiculaire à la direction des fixations desdits extensomètres sur lesdites couronnes, lesdites saillies constituant des points de montage desdites couronnes sur ledit élément de forage à l'aide de moyens de solidérisation.

Selon un mode de réalisation préférentiel lesdites saillies comportent chacune une lamelle flexible constituant une articulation des couronnes par rapport à l'élément de forage lorsque ledit élément est soumis à une flexion dans un plan contenant lesdites saillies.

Avantageusement les couronnes de support comportent des encoches dans chacune desquelles s'engage une patte de fixation des extensomètres, lesdites pattes de fixations étant maintenues dans lesdites encoches par des vis de blocage.

Les couronnes de support comportent en outre des encoches latérales, situées symétriquement par rapport à une encoche de réception d'une patte de fixation, dans lesquelles sont engagées des cales déplaçables par des vis pousseuses de manière à exercer une précontrainte sur les extensomètres.

Avantageusement, des patins amortisseurs sont placés entre les extensomètres et l'élément de forage pour amortir les vibrations.

La présente invention englobe enfin une méthode de mesure de tension et de couple de torsion appliqués à un élément de forage à l'aide d'un dispositif de montage de capteurs extensométriques tel que précédemment décrit, caractérisée en ce que l'on place des jauges de contraintes sur le premier et le second capteur au niveau des lames médianes de chaque parallélogramme déformable, on effectue des mesures lorsque des déformations sont engendrées, on calcule les contraintes appliquées en effectuant d'une part la somme des signaux électriques pour les jauges situées sur la première zone de mesure afin d'obtenir la valeur de la tension, et d'autre part la somme des signaux pour les jauges situées sur la seconde zone de mesure pour obtenir le couple de torsion.

On décrira maintenant plus en détail une forme de réalisation particulière de l'invention qui en fera mieux comprendre les caractéristiques essentielles et les avantages, étant toutefois entendu que cette forme de réalisation est choisie à titre d'exemple et qu'elle n'est nullement limitative. Sa description est illustrée par les dessins annexés dans lesquels :
- la figure 1 représente deux capteurs extensométriques de mesure de contraintes reliées à un dispositif de montage sous forme de couronnes de support,
- la figure 2 représente le montage d'une couronne de support sur l'élément de forage.
- la figure 3 représente une vue d'ensemble d'un capteur extensométrique monté sur un élément de forage à l'aide de deux couronnes de support, ainsi que les connections eléctriques liées à un tel dispositif.

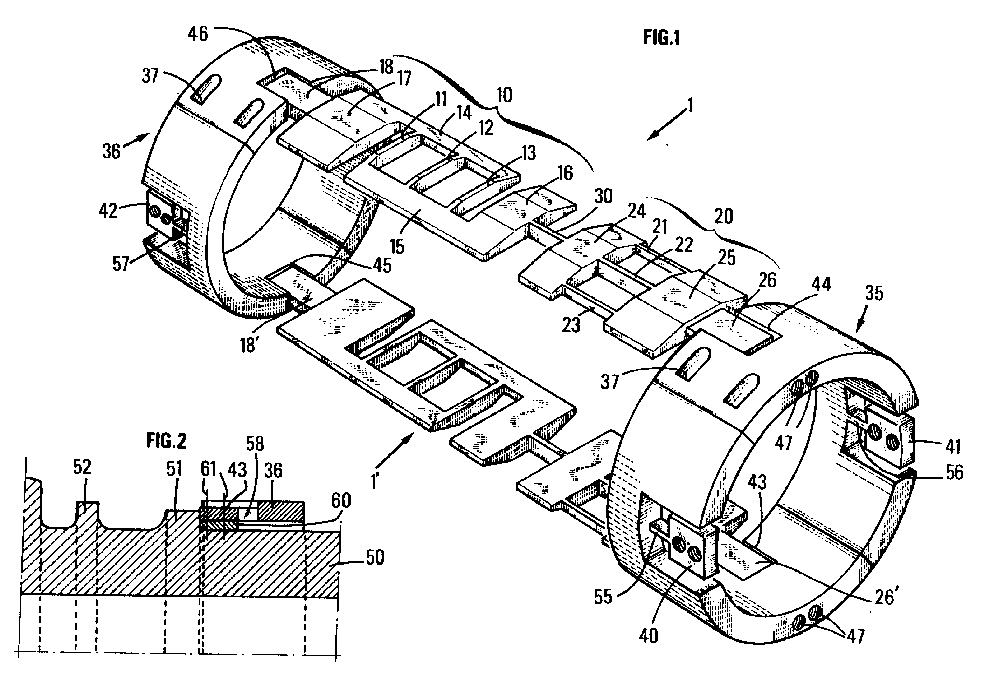

La figure 1 présente un ensemble de montage pour jauges de contraintes à disposer sur un élément de forage au fond d'un puits tel que notamment un élément d'un train de tiges ou un tubage.

Cet ensemble comporte deux capteurs extensométriques 1, 1' pour la mesure des contraintes à l'aide de jauges.

Sur la figure 1 apparaissent les deux capteurs extensométriques 1, 1' montés à chacune de leurs extrémités sur deux couronnes de support 35, 36 entourant l'élément tubulaire.

Dans ce qui suit, on décrira tout d'abord la constitution d'un capteur extensométrique seul avant d'examiner son mode de positionnement par rapport à l'élément de forage.

Ce capteur extensométrique comporte une première zone de mesure 10, destinée à mesurer la traction appliquée sur l'élément soumis aux contraintes. Cette première zone de mesures comporte trois lames de traction 11, 12, 13 sur lesquelles sont collées les jauges de mesure, ces trois lames étant reliées à leurs extrémités par des montants 14, 15. L'ensemble des trois lames de traction 11, 12, 13 et des deux montants, réalise un parallélogramme déformable, suivant la direction des montants, car ceux-ci ont une épaisseur largement dimensionnée par rapport à celle des lames de traction. Dans le mode de réalisation présenté à la figure 1, la première zone de mesure comporte trois lames de traction. Deux lames sont placées à chaque extrémité du parallélogramme déformable, la troisième étant sur la médiatrice. Sur cette troisième lame sont placées en symétrie par paires quatre jauges 80, sur chaque face de cette lame médiane.
Cependant les avantages de la présente invention seraient encore obtenus si cette première zone ne comportait que deux lames, les jauges étant alors réparties sur chacune d'entre elles.

Le capteur extensométrique comporte une seconde zone de mesure 20 munie de trois lames de torsion 21, 22, 23 reliées à leurs extrémités par des traverses 24, 25 largement dimensionnées par rapport auxdites lames de torsion 21, 22, 23, de manière à réaliser un second parallélogramme déformable 20 selon la direction des traverses. De la même manière que pour la première zone de mesure, le second parallélogramme comporte deux lames 21, 23 aux extrémités du parallélogramme et une lame centrale médiane 22 sur laquelle sont disposées les jauges de contraintes 81. Cependant on pourrait envisager de n'utiliser que deux de ces lames de torsion.

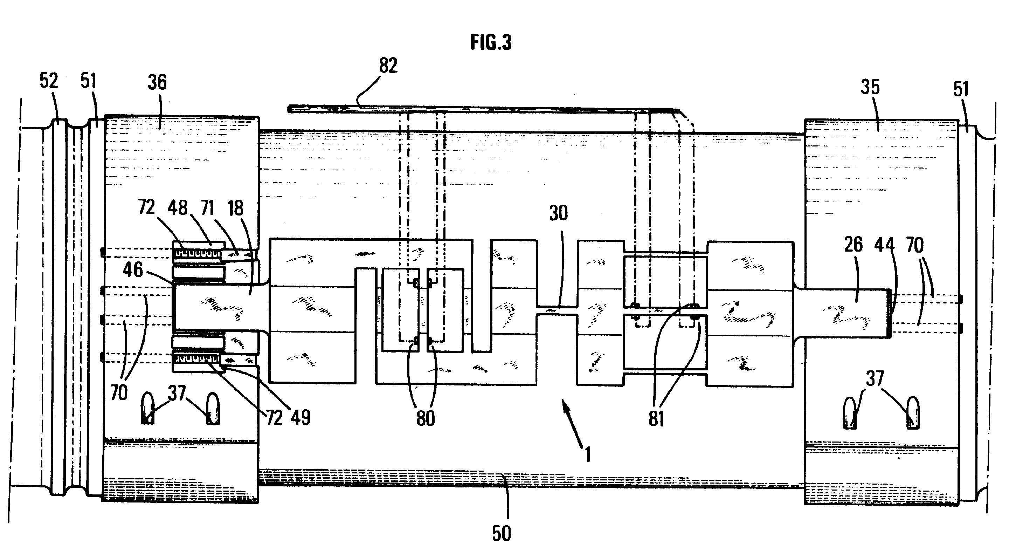

Les jauges placées sur la lame médiane de la première zone et celles placées sur la lame médiane de la seconde zone sont reliées par des connections électriques 82 (figure 3) qui transmettent les signaux reçus vers une électronique de commande afin d'être analysés et acheminés ensuite en surface.

La première zone de mesure 10 et la seconde zone de mesure 20 sont reliées l'une à l'autre par des moyens de coopération, tels que notamment une articulation 30 disposée centralement par rapport à un axe longitudinal passant par la première et la seconde zone. Cette articulation 30 relie les deux zones, de manière à ce que les lames de tension 11, 12, 13 soient orientées dans une direction perpendiculaire à la direction des lames de torsion 21, 22, 23. De plus cette articulation centrale 30 assure une flexion du capteur selon l'axe longitudinal du capteur sans action de déformation sur les première et seconde zones de mesures.

La première zone de mesure comporte en outre sur une extrémité de chaque montant un prolongement, respectivement 16 pour le montant 15 et 17 pour le montant 14, placé à l'équerre de manière à assurer le positionnement de cette première zone. Le prolongement 16 placé perpendiculairement au montant 15 supporte l'articulation centrale 30 qui le relie à la traverse 24. Sur la face opposée du parallélogramme, le prolongement 17 placé perpendiculairement au montant 14 supporte une patte de fixation 18 adaptée pour permettre une coopération avec l'élément de forage. Symétriquement sur la traverse 25 est disposée de manière identique une seconde patte de fixation 26.

L'axe longitudinal du capteur extensométrique coïncide avec les directions des pattes de fixation 18, 26 et de l'articulation centrale de flexion 30.

Les traverses 24, 25 et les prolongements 16, 17 sont situés dans des directions parallèles.

On comprendra aisément que les prolongements 16, 17 ne sont reliés qu'à un seul montant de manière à permettre une déformation du parallélogramme de traction tout en maintenant les deux prolongements 16, 17 dans des directions parallèles aux deux traverses 24, 25.

De manière préférentielle non limitative, la longueur des lames 11, 12, 13, 21, 22, 23 et la longueur totale du capteur 1 sont comprises dans un rapport de 1/10 à 2/10. Le rapport de l'épaisseur desdites lames à l'épaisseur des montants ou des traverses est compris dans l'intervalle 1/20 à 1/10. Par de tels dimensionnements, on permet au capteur extensométrique de transformer de manière notoire les contraintes qu'il subit en déformations des deux parallélogrammes orientés suivant deux directions perpendiculaires.

Après avoir indiqué la constitution géométrique du capteur extensométrique, il est nécessaire d'examiner son positionnement par rapport à l'objet soumis aux contraintes.

Le cadre de la présente invention peut se concevoir dans le cas d'une simple barre longitudinale. Dans ce cas d'application, il serait nécessaire de placer le capteur extensométrique suivant son axe central dans le sens longitudinal de la barre. Les pattes de fixation 18, 26 coopèrent avec la barre de manière à assurer ce positionnement suivant la direction longitudinale.

On peut concevoir également de placer un capteur extensométrique à l'intérieur d'un tube de manière à faire coïncider l'axe du tube avec l'axe longitudinal du capteur. Des moyens de montage sont adaptés pour supporter les pattes de fixation et assurer un positionnement axial.

Cependant la présente invention s'applique de manière préférentielle (comme présenté aux figures 1 et 3) à un positionnement du capteur extensométrique sur la surface extérieure d'un tube de forage.

Pour sa fixation, on utilise deux couronnes 35, 36 dont chacune est constituée de deux demi-flasques qui viennent entourer l'élément de forage 50. Chacun des demi-flasques est solidarisé l'un par rapport à l'autre par des moyens de fixation 37, tels que notamment des vis traversant un filetage d'un premier flasque se poursuivant par un filetage d'un second flasque.

Afin d'empêcher un mouvement de rotation des deux couronnes par rapport à l'élément de forage, on réalise sur chacun des flasques, deux saillies respectivement 40, 41; 42, 43 muni d'orifices pour le passage de fixations sur l'élément de forage. Lorsque les deux couronnes sont montées, ces saillies sont situées dans un plan d'une section diamétrale de l'élément de forage.

La figure 2 montre une vue en coupe de la fixation de la saillie 43 sur un élément de forage 50. La couronne 35 vient en butée latérale contre un renfort de contraintes 51 donnant au tube un diamètre plus large que sur la zone sensible où les mesures de contraintes sont effectuées par le capteur.

De manière à laisser un jeu entre les couronnes et l'élément de forage, le diamètre intérieur des couronnes est plus important que le diamètre extérieur du tube de forage. Pour assurer par contre une bonne fixation des couronnes, on place entre la saillie 43 et le tube 50 une entretoise 60.

Chacune des saillies 40, 41, 42, 43 comporte une lamelle flexible 55, 56, 57, 58 constituant une articulation des couronnes par rapport à l'élément de forage lorsque ledit élément est soumis à une flexion dans un plan contenant lesdites saillies.

La fixation de chaque capteur extensométrique sur les couronnes (figure 1) se fait par l'engagement des pattes de fixations 26, 18, 26', 18' chacune dans une encoche, respectivement 43, 44, 45, 46 réalisée dans l'épaisseur de ladite couronne.

Chaque couronne comporte deux encoches disposées dans une direction perpendiculaire à la direction passant par les deux saillies de fixation de ladite couronne sur le tube de forage.

Les deux encoches et les deux saillies sont respectivement placées en symétrie par rapport à l'axe longitudinal du tube.

Au niveau de chaque encoche 43, 44, 45, 46 la couronne est munie dans son épaisseur de conduits de passage 47 qui débouchent sur le fond de l'encoche.

Ces conduits de passage 47 reçoivent des vis de blocage 70 qui représentées à la figure 3 viennent maintenir le capteur extensométrique dans tout battement longidutinal.

Il est nécessaire qu'au repos la mesure du zéro de contraintes soit la même dans chaque capteur extensométrique. Or même si des précautions d'usinage sont prises, il est indispensable qu'au niveau de la fixation des extensomètres sur une des couronnes il y ait un dispositif de rattrapage des erreurs d'usinage.

On réalise ce rattrapage d'erreurs par l'utilisation sur une des deux couronnes de deux encoches latérales 48, 49 à l'encoche centrale 46 recevant la patte de fixation. Ces encoches latérales reçoivent des cales 71 dont le profil va en s'élargissant et qui viennent appuyer contre les parois de la couronne sous l'action de vis pousseuses 72.

Ainsi ce dispositif de cales et de vis pousseuses permet de mettre une légère précontrainte dans chaque extensomètre, de façon à éviter les phénomènes d'hystérésis.

Le système étant soumis à de fortes vibrations, des précautions doivent être prises pour éviter que le système ne soit détruit. D'une part les extensomètres et les couronnes sont réalisées pour être allégés le plus possible sans nuire à leur rigidité, d'autre part des patins, pouvant être notamment en caoutchouc, sont callés entre le tube et les extensomètres pour amortir les vibrations.

Enfin entre les couronnes et le tube de forage a été injecté un polymer souple pour amortir le déplacement des couronnes.

De manière à augmenter la sensibilité des mesures on place symétriquement deux capteurs extensométriques. Cependant on pourrait réaliser les mêmes avantages en associant à un capteur extensométrique une barre pleine, de manière à ce que celle-ci compense identiquement les efforts soumis audit capteur.

On peut craindre les effets de dilatation différentielle entre le tube central et les extensomètres lors des changements de température. Pour les éliminer, il faut que les extensomètres et le tube soient usinés à partir du même lingot de métal. Ainsi les mêmes coefficients de dilatation se retrouvent dans les extensomètres et dans le tube central.

Enfin, il est évident que pour l'homme de l'art, les articulations présentées dans ce qui précède sous forme de lames flexibles peuvent être remplacées notamment par des butées à billes, des articulations à couteau, etc...

Naturellement, l'invention n'est en rien limitée par les particularités qui ont été spécifiées dans ce qui précède ou par les détails du mode de réalisation particulier choisi pour illustrer l'invention. Toutes sortes de variantes peuvent être apportées à la réalisation particulière qui a été décrite à titre d'exemple et à ses éléments constitutifs sans sortir pour autant du cadre de l'invention. Cette dernière englobe ainsi tous les moyens constituant des équivalents techniques, des moyens décrits ainsi que leurs combinaison.

## Revendications

1. Capteur extensométrique (1, 1') de mesure de contraintes à l'aide de jauges agissant sur un élément de forage (50) au fond d'un puits, caractérisé en ce que ledit capteur (1, 1'), comporte
- une première zone de mesure (10) composée d'au moins deux lames de traction (11, 12, 13) sur lesquelles sont montées des jauges de mesure reliées à leurs extrémités par des montants (14, 15) de manière à réaliser un premier parallélogramme déformable, lesdites lames de traction (11, 12, 13) étant orientées suivant une première direction,
- une seconde zone de mesure (20) composée d'au moins deux lames de torsion (21, 22, 23) sur lesquelles sont montées des jauges de mesure, reliées à leurs extrémités par des traverses (24, 25) de manière à réaliser un second parallélogramme déformable, lesdites lames de torsion (21, 22, 23) étant orientées suivant une seconde direction perpendiculaire à la première direction,
- ladite première zone (10) et ladite seconde zone (20) étant reliées l'une à l'autre par des moyens de coopération (30) et munies de moyens de montage (18, 26) sur ledit élément de forage,
- lesdites traverses (24, 25) et lesdits montants (14, 15) ayant une section largement dimensionnée par rapport auxdits lames de torsion (11, 12, 13) et auxdites lames de tension (21, 22, 23).

2. Capteur extensométrique de mesure de contraintes selon la revendication 1, caractérisé en ce que les moyens de coopération entre la première zone (10) et la seconde zone (20) comprennent une articulation (30) disposée centralement par rapport à un axe longitudinal passant par lesdites première et seconde zones, ladite articulation assurant une flexion du capteur selon ledit axe longitudinal sans action de déformation sur les première et seconde zones.

3. Capteur extensométrique de mesure de contraintes selon la revendication 2, caractérisé en ce que les montants (14, 15) de la première zone comportent chacun à une de leurs extrémités un prolongement (16, 17) à l'équerre, un prolongement (16) d'un premier montant (15) étant relié à l'articulation de flexion (30), et un prolongement (17) d'un second montant (14) étant muni d'une patte de fixation (18) audit élément de forage.

4. Capteur extensométrique de mesure de contraintes selon les revendications 2 ou 3, caractérisé en ce qu'une première traverse (24) de la seconde zone (20) est reliée à l'articulation de flexion (30) et qu'une seconde traverse (25) est munie d'une patte de fixation (26) audit élément de forage.

5. Capteur extensométrique de mesure de contraintes selon les revendications 3 ou 4, caractérisé en ce que lesdits prolongements (16, 17) des montants et lesdites traverses (24, 25) sont situés dans des directions parallèles, perpendiculaires à la direction de l'articulation de flexion (30).

6. Capteur extensométrique de mesure de contraintes selon l'une quelconque des revendications 1 à 5, caractérisé en ce que chacune des première et seconde zones de mesure comporte trois lames (11, 12, 13 ; 21, 22, 23) dont deux (11, 13 ; 21, 23) d'entre elles réalisent les faces opposées du parallélogramme déformable et dont la troisième (12, 22), médiane aux deux premières, supporte les jauges de mesure de contraintes.

7. Capteur extensométrique de mesure de contraintes selon l'une quelconque des revendications 1 à 6, caractérisé en ce que le rapport entre la longueur des lames (11, 12, 13, 21, 22, 23) et la longueur totale du capteur (1, 1') est compris dans un intervalle de 1/10 à 2/10 et en ce que le rapport entre l'épaisseur desdites lames et l'épaisseur des montants ou des traverses est compris dans un intervalle de 1/20 à 1/10.

8. Dispositif de montage d'au moins un capteur extensométrique (1, 1') de mesure de contraintes selon l'une quelconque des revendications 1 à 7, sur un élément de forage (50) au fond d'un puits, caractérisé en ce que le capteur est monté sur ledit élément par des moyens de support (35, 36) de manière à ce que l'axe dudit capteur soit sensiblement dans la direction longitudinale dudit élément de forage.

9. Dispositif de montage selon la revendication 8, caractérisé en ce que les moyens de support comportant deux couronnes (35, 36) disposées autour de l'élément de forage et supportant d'une part, chacune une extrémité d'un capteur (1) par l'intermédiaire d'une patte de fixation (18, 26) et d'autre part une pièce (1') située symétriquement audit capteur par rapport à l'axe de l'élément de forage.

10. Dispositif de montage selon la revendication 9, caractérisé en ce que ladite pièce (1') placée symétriquement à un capteur (1), est constituée par un second capteur extensométrique.

11. Dispositif de montage selon l'une quelconque des revendications 9 ou 10, caractérisé en ce que chacune des couronnes de support (35, 36) comporte deux saillies (40, 41; 42, 43) diamétralement opposées par rapport à l'axe de l'élément de forage (50), situées dans une direction perpendiculaire à la direction des fixations desdits extensomètres sur lesdites couronnes, lesdites saillies constituant des points de montage desdites couronnes sur ledit élément de forage à l'aide de moyens de solidérisation.

12. Dispositif de montage selon la revendication 11, caractérisé en ce que lesdites saillies (40, 41, 42, 43) comportent chacune une lamelle flexible (55, 56, 57, 58) constituant une articulation des couronnes par rapport à l'élément de forage lorsque ledit élément est soumis à une flexion dans un plan contenant lesdites saillies.

13. Dispositif de montage selon l'une quelconque des revendications 9 à 12, caractérisé en ce que les couronnes de support (35, 36) comportent des encoches (43, 44, 45, 46) dans chacune desquelles s'engage une patte de fixation (18, 26, 18', 26') des extensomètres, lesdites pattes de fixation étant maintenues dans lesdites encoches par des vis de blocage (70).

14. Dispositif de montage selon la revendication 13, caractérisé en ce que les couronnes de support (35, 36) comportent en outre des encoches latérales (48, 49), situées symétriquement par rapport à une encoche de réception d'une patte de fixation, dans lesquelles sont engagées des cales (71) déplaçables par des vis pousseuses (72) de manière à exercer une précontrainte sur les extensomètres.

15. Dispositif de montage selon l'une quelconque des revendication 9 à 14, caractérisé en ce que des patins amortisseurs sont placés entre les extensomètres et l'élément de forage pour amortir les vibrations.

16. Méthode de mesure de tension et de couple de torsion appliqués à un élément de forage (1) à l'aide d'un dispositif de montage de capteurs extensométriques (1, 1') selon l'une quelconques des revendications 8 à 11, caractérisée en ce qu'on place des jauges de contraintes sur le premier et le second capteur (1, 1') au niveau des lames médianes (12, 22) de chaque parallélogramme déformable, on effectue des mesures lorsque des déformations sont engendrées, on calcule les contraintes appliquées en effectuant d'une part la somme des signaux électriques pour les jauges situées sur la première zone de mesure afin d'obtenir le couple de torsion, et d'autre part la somme des signaux pour les jauges situées sur la seconde zone de mesure pour la tension.

## Patentansprüche

1. Extensometer-Aufnehmer (1, 1') zum Messen von Beanspruchungen, die auf ein Bohrelement (50) am Boden eines Bohrlochs wirken, mit Hilfe von Dehnungsmeßstreifen, dadurch gekennzeichnet, daß der Aufnehmer (1, 1') umfaßt
- eine erste Meßzone (10), die aus wenigstens zwei Zugstäben (11, 12, 13) zusammengesetzt ist, auf denen Dehnungsmeßstreifen montiert sind, die an ihren Enden über Ständer (14, 15) derart verbunden sind, daß ein erstes verformbares Parallelogramm gebildet wird, wobei diese Zugstäbe (11, 12, 13) gemäß einer ersten Richtung orientiert sind,
- eine zweite Meßzone (20), die aus wenigstens zwei Torsionsstäben (21, 22, 23) zusammengesetzt ist, auf denen Dehnungsmeßstreifen montiert sind, die an ihren Enden über Traversen (24, 25) derart verbunden sind, daß ein zweites verformbares Parallelogramm gebildet wird, wobei diese Torsionsstäbe (21, 22, 23) gemäß einer zweiten Richtung senkrecht zur ersten Richtung orientiert sind,
- wobei diese erste Zone (10) und diese zweite Zone (20) miteinander über Zusammenwirkungsmittel (30) verbunden sind, welche mit Montagemitteln (18, 26) auf diesem Bohrelement versehen sind und
- wobei diese Traversen (24, 25) und diese Pfosten (14, 15) einen groß bezogen auf diese Torsionsstäbe (11, 12, 13) und diese Spannungsstäbe (21, 22, 23) dimensionierten Querschnitt haben.

2. Extensometer-Aufnehmer zum Messen von Beanspruchungen gemäß Anspruch 1, dadurch gekennzeichnet, daß diese Mittel zum Zusammenwirken zwischen der ersten Zone (10) und der zweiten Zone (20) eine Anlenkausbildung (30) haben, die mittig bezogen auf eine Längsachse angeordnet ist, die durch diese erste und zweite Zone geht, wobei diese Gelenkausbildung eine Biegung des Aufnehmers gemäß dieser Längsachse ohne Wirkung der Verformung auf diese ersten und zweiten Zonen sicherstellt.

3. Extensometer-Aufnehmer zum Messen von Beanspruchungen gemäß Anspruch 2, dadurch gekennzeichnet, daß die Pfosten (14, 15) der ersten Zone je an einem ihrer Enden eine Verlängerung (16, 17) im Winkel hierzu umfassen, wobei eine Verlängerung (16) eines ersten Ständers (15) mit der Anlenkbiegeausbildung (30) verbunden ist und eine Verlängerung (17) eines zweiten Ständers (14) mit einer Befesitungspratze (18) an diesem Bohrelement ausgestattet ist.

4. Extensometer-Aufnehmer zum Messen von Beanspruchungen gemäß den Ansprüchen 2 oder 3, dadurch gekennzeichnet, daß eine erste Traverse (24) der zweiten Zone (20) mit der Biegeanlenkausbildung (30) verbunden ist und daß eine zweite Traverse (25) mit einer Befestigungspratze (26) an diesem Bohrelement versehen ist.

5. Extensometer-Aufnehmer zum Messen von Beanspruchungen gemäß den Ansprüchen 3 und 4, dadurch gekennzeichnet, daß diese Verlängerungen (16, 17) der Ständer und diese Traversen (24, 25) in parallelen Richtungen senkrecht zur Richtung der Biegegelenkeausbildung (30) angeordnet sind.

6. Extensometer-Aufnehmer zum Messen von Beanspruchungen gemäß einem der Ansprüche 1 bis 5, dadurch gekennzeichnet, daß jede der ersten und zweiten Meßzonen drei Stäbe (11, 12, 13; 21, 22, 23) umfaßt, von denen zwei (11, 13; 21, 23) die gegenüberliegenden Flächen des verformbaren Diagramms bilden und deren dritte, bezüglich der beiden ersteren mittlere (11, 22), die Dehnungsmeßstreifen trägt.

7. Extensometer-Aufnehmer zum Messen von Beanspruchungen gemäß einem der Ansprüche 1 bis 6, dadurch gekennzeichnet, daß das Verhältnis zwischen der Länge der Stäbe (11, 12, 13, 21, 22, 23) und der Gesamtlänge des Aufnehmers (1, 1') in einem Intervall von 1/10 bis 2/10 liegt und daß das Verhältnis zwischen der Dicke dieser Stäbe und der Dicke der Ständer oder der Traversen in einem Bereich zwischen 1/20 bis 1/21 liegt.

8. Vorrichtung zur Montage wenigstens eines Extensometer-Aufnehmers (1, 1') zum Messen von Beanspruchungen gemäß einem der Ansprüche 1 bis 7, auf einem Bohrelement (50) am Boden eines Bohrlochs, dadurch gekennzeichnet, daß der Aufnehmer auf diesem Element über Trägermittel (35, 36) derart angebracht ist, daß die Achse des Aufnehmers im wesentlichen in der Längsrichtung dieses Bohrelements liegt.

9. Montagevorrichtung nach Anspruch 8, dadurch gekennzeichnet, daß die Trägermittel zwei Ringkränze (35, 36) umfassen, die um das Bohrelement herum angeordnet sind und einerseits je ein Ende eines Aufnehmers (1) vermittels einer Befestigungspratze (18, 26) und andererseits ein Bauteil (1') tragen, das symmetrisch bezüglich des Aufnehmers, bezogen auf die Achse des Bohrelementes, angeordnet ist.

10. Montagevorrichtung gemäß Anspruch 9, dadurch gekennzeichnet, daß dieses symmetrisch zu einem Aufnehmer (1) angeordnete Bauteil (1') gebildet wird durch einen zweiten Extensometer-Aufnehmer.

11. Montagevorrichtung nach einem der Ansprüche 9 oder 10, dadurch gekennzeichnet, daß jeder der Träger Kränze (35, 36) zwei Vorsprünge (40, 41; 42, 43) umfaßt, die diametral einander gegenüber bezogen auf die Achse des Bohrelements (50) angeordnet und in einer Richtung senkrecht zur Richtung der Befestigungen dieser Extensometer an diesen Ringkränzen angeordnet sind, wobei diese Vorsprünge Montagepunkte für diese Ringkränze auf diesem Bohrelement vermittels von Befestiungsmitteln darstellen.

12. Montagevorrichtung nach Anspruch 11, dadurch gekennzeichnet, daß diese Vorsprünge (40, 41, 42, 43) je eine flexible Lamelle (55, 56, 57, 58) umfassen, die eine Anlenkung der Ringkränze bezogen auf das Bohrelement darstellen, wenn dieses Element einer Biegung in einer dieser Vorsprünge enthaltenden Ebene ausgesetzt ist.

13. Montagevorrichtung nach einem der Ansprüche 9 bis 12, dadurch gekennzeichnet, daß diese Ringträgerkränze (35, 36) Ausnehmungen (43, 44, 45, 46) umfassen, in deren jede eine Befestigungspratze (18, 26, 18', 26') der Extensometer greift, wobei diese Befestigungspratzen in diesen Ausnehmungen über Blockierschrauben (70) gehalten sind.

14. Montagevorrichtung nach Anspruch 13, dadurch gekennzeichnet, daß die Trägerkränze (35, 36) im übrigen seitliche Ausnehmungen (48, 49) umfassen, welche symmetrisch bezogen auf eine Aufnehmerausnehmung einer Befestigungspratze sind, in welche Keile (71) greifen, die durch Drückerschrauben (72) derart verschiebbar sind, daß sie eine Vorspannung auf die Extensometer ausüben.

15. Montagevorrichtung nach einem der Ansprüche 9 bis 14, dadurch gekennzeichnet, daß Dämpferschuhe zwischen die Extensometer und das Bohrelement zum Dämpfen der Vibrationen eingesetzt sind.

16. Verfahren zum Messen von an einem Bohrelement (1) wirkenden Zugspannungen und Torsionsmomenten, mit Hilfe einer Montagevorrichtung für Extensometer-Aufnehmer (1, 1') nach einem der Ansprüche 8 bis 11, dadurch gekennzeichnet, daß man Dehnungsmeßstreifen auf den ersten und den zweiten Aufnehmer (1, 1') in Höhe der mittleren Stäbe (12, 22) jedes verformbaren Diagramms anbringt, daß man Messungen durchführt, wenn Verformungen erzeugt werden, man die angelegten Beanspruchungen berechnet, indem man einerseits die Summe der elektrischen Signale für die in der ersten Zone angebrachten Meßstreifen bildet, um das Torsionsmoment zu erhalten und andererseits die Summe der Signale für die in der zweiten Zone angeordneten Meßstreifen für die Spannung bildet.

## Claims

1. Extension transducer (1, 1') for measuring stresses by means of gauges acting on a drilling element (50) at the bottom of a well, characterised in that the said transducer (1, 1') includes:
- a first measuring zone (10) consisting of at least two traction plates (11, 12, 13) on which are mounted measuring gauges connected at their ends by uprights (14, 15) so as to produce a first deformable parallelogram, the said traction plates (11, 12, 13) being oriented in a first direction,
- a second measuring zone (20) consisting of at least two torsion plates (21, 22, 23) on which are mounted measuring gauges connected at their ends by cross members (24, 25) so as to produce a second deformable parallelogram, the said torsion plates (21, 22, 23) being oriented in a second direction at right angles to the first direction,
- the said first zone (10) and the said second zone (20) being connected to each other by interaction means (30) and provided with means (18, 26) for mounting on the said drilling element,
- the said cross members (24, 25) and the said uprights (14, 15) being amply dimensioned compared with the said torsion plates (11, 12, 13) and the said tension plates (21, 22, 23).

2. Extension transducer for measuring stresses, according to Claim 1, characterised in that the means of interaction between the first zone (10) and the second zone (20) comprise an articulation (30) disposed centrally with respect to a longitudinal axis passing through the said first and second zones, the said articulation providing bending of the transducer along the said longitudinal axis without any deformation action on the first and second zones.

3. Extension transducer for measuring stresses, according to Claim 2, characterised in that the uprights (14, 15) in the first zone each have, at one of their ends, a right-angle extension (16, 17), an extension (16) of a first upright (15) being connected to the bending articulation (30), and an extension (17) of a second upright (14) being provided with a lug (18) for fixing to the said drilling element.

4. Extension transducer for measuring stresses, according to Claims 2 or 3, characterised in that a first cross member (24) in the second zone (20) is connected to the bending articulation (30) and a second cross member (25) is provided with a lug (26) for fixing to the said drilling element.

5. Extension transducer for measuring stresses, according to Claims 3 or 4, characterised in that the said extensions (16, 17) of the uprights and the said cross members (24, 25) are situated in parallel directions, at right angles to the direction of the bending articulation (30).

6. Extension transducer for measuring stresses, according to any one of Claims 1 to 5, characterised in that each of the first and second measuring zones has three plates (11, 12, 13; 21, 22, 23), two of which (11, 13; 21, 23) produce the opposite faces of the deformable parallelogram and the third of which (12, 22), median to the first two, carries the strain gauges.

7. Extension transducer for measuring stresses, according to any one of Claims 1 to 6, characterised in that the ratio of the length of the plates (11, 12, 13, 21, 22, 23) to the total length of the transducer (1, 1') is between 1:10 and 2:10 and the ratio of the thickness of the said plates to the thickness of the uprights or cross members is between 1:20 and 1:10.

8. Device for mounting at least one extension transducer (1, 1') for measuring stresses, according to any one of Claims 1 to 7, on a drilling element (50) at the bottom of a well, characterised in that the transducer is mounted on the said element through support means (35, 36) in such a way that the axis of the said transducer is substantially longitudinal to the said drilling element.

9. Mounting device according to Claim 8, characterised in that the support means include two rings (35, 36) disposed around the drilling element and each supporting, on the one hand, one end of a transducer (1) by means of a fixing lug (18, 26) and on the other hand a part (1') situated symmetrically with the said transducer with respect to the axis of the drilling element.

10. Mounting device according to Claim 9, characterised in that the said part (1') positioned symmetrically with a transducer (1) consists of a second extension transducer.

11. Mounting device according to either one of Claims 9 or 10, characterised in that each of the support rings (35, 36) has two projections (40, 41; 42, 43) diametrically opposed with respect to the axis of the drilling element (50), situated in a direction at right angles to the direction of the fixings of the said extension transducers to the said rings, the said projections constituting points for mounting the said rings on the said drilling element using fixing means.

12. Mounting device according to Claim 11, characterised in that the said projections (40, 41, 42, 43) each have a flexible leaf (55, 56, 57, 58) constituting an articulation of the rings with respect to the drilling element when the said element is subjected to bending in a plane containing the said projections.

13. Mounting device according to any one of Claims 9 to 12, characterised in that the support rings (35, 36) have recesses (43, 44, 45, 46) in each of which a lug (18, 26, 18', 26') for fixing the extension transducers is engaged, the said fixing lugs being held in the said recesses by locking screws (70).

14. Mounting device according to Claim 13, characterised in that the support rings (35, 36) also have lateral recesses (48, 49), situated symmetrically with respect to a recess for receiving a fixing lug, in which are engaged wedges (71) which can be moved by pusher screws (72) so as to exert a prestress on the extension transducers.

15. Mounting device according to any one of Claims 9 to 14, characterised in that shock absorbing pads are placed between the extension transducers and the drilling element in order to absorb vibration.

16. Method for measuring tension and torsional moment applied to a drilling element (1) using a device for mounting extension transducers (1, 1') according to any one of Claims 8 to 11, characterised in that strain gauges are positioned on the first and second transducers (1, 1') on the middle plates (12, 22) in each deformable parallelogram, measurements are made when deformations are generated, the stresses applied are calculated by effecting on the one hand the sum of the electrical signals for the gauges situated in the first measuring zone in order to obtain the torsional moment, and on the other hand the sum of the signals for the gauges situated in the second measuring zone for the tension.
